# EUROPEAN PATENT APPLICATION

(11) **EP 1 854 656 A2**
(43) Date of publication of application: **14.11.2007**
(21) Application number: 07007551.0
(22) Date of filing: 12.04.2007
(51) Int. Cl.: B60K 37/02

(54) **Noncontact input device for in-vehicle apparatus**

(30) Priority: 12.04.2006 JP 2006109320; 15.12.2006 JP 2006337739
(71) Applicant: Hitachi, Ltd., Chiyoda-ku Tokyo 100-8280 (JP)
(72) Inventor: Ishikawa, Tadaaki, Chiyoda-ku Tokyo 100-8220 (JP); Maruyama, Yukinobu, Chiyoda-ku Tokyo 100-8220 (JP); Ishii, Takaaki, Chiyoda-ku Tokyo 100-8220 (JP); Otsuka, Rieko, Chiyoda-ku Tokyo 100-8220 (JP)
(74) Representative: Strehl Schübel-Hopf & Partner

(57) **Abstract**

An in-vehicle apparatus (such as a car navigation system or a car audio) equipped with multiple detectors (2a-2c) mounted around the operation portion (1) to make it possible to detect from which direction a hand (3) has approached the operation portion (1). The fields of view and the positions of the detectors (2a-2c) are so determined that the detectors (2a-2c) have no dead angle. If the positional relationship between passengers in the vehicle is previously known, it can be discerned from the detected direction as to whether the operator is the driver or a fellow passenger. At the same time, the multiple detectors (2a-2c) arranged around the operation portion (1) can also be used as detectors for simple operations utilizing hand waving that can be performed by the driver during driving.

## Description

### BACKGROUND OF THE INVENTION

The present invention relates to a method of entering commands into an in-vehicle apparatus such as a car audio or car navigation system and also to the apparatus.

Many input devices (input portions) of in-vehicle apparatus such as car audios and car navigation systems are equipped with a remote controller, buttons on the body, or buttons displayed on the display screen of the body. Because of problems of installation space, these kinds of buttons are relatively small in size and few in number. Often, multiple functions are assigned to each button by switching the mode of operation or level of hierarchy. In actual operation, it is necessary to watch the buttons and display screen carefully. However, during driving, it is dangerous for the driver to carefully watch the apparatus not directly associated with driving. This also presents legal problems. Therefore, in some apparatus, the buttons are inhibited from being manipulated during driving. In other apparatus, hand waving (hand signaling) or voice commands are used to make it unnecessary for the driver to make careful observation. One example of the technique for recognizing operator's hand waving (hand signaling) and entering the signal into the apparatus is found in JP-A-2005-141542, entitled "Noncontact Input Interface Apparatus". In this technique, the apparatus is equipped with multiple detectors responding to hand motions (hand waving).
The performed hand waving is reconstructively identified from the order of the detectors in which they responded. Commands corresponding to the identified hand waving are issued to the apparatus. Input can be made simply by performing hand waving ahead of the detectors. Therefore, this technique is safer than operation of buttons in which the positions of the buttons must be checked for entry and the consciousness tends to be distracted from driving.
This technique is cheaper to achieve than hand waving recognition using images utilizing a camera. However, when commands are entered by making use of hand waving recognition, one action of hand waving is assigned to one input. Therefore, this technique is adapted for several simple operations but, to perform more complex operations, the kinds and number of hand waving actions are increased too much. Consequently, buttons for complex operations need to be left.

It is to be noted that a fellow passenger other than the driver on the driver's seat can carefully watch and operate the apparatus even during driving. Furthermore, there is a demand for a technique permitting a person other than the driver to operate the apparatus during driving because more sophisticated functions have been given to the display device. For this purpose, there is a demand for a technique which, during driving, permits the driver to make inputs utilizing simple hand waving alone and, at the same time, permits a fellow passenger other than the driver to perform operations that need careful observation of buttons and touch panel. To achieve this, a function of discriminating whether the present operator is the driver or other fellow passenger and of modifying the method of display or operations according to the operator, as well as recognition of hand waving, is necessary.

Furthermore, the driver frequently has more knowledge about operations of the display device than fellow passengers. In addition, the driver wants to operate the display device by making use of a short stop time as encountered during waiting at a stoplight. Moreover, there is a demand for a technique which permits operation not completed in a short stop time to be handed down to a fellow passenger during driving.

### SUMMARY OF THE INVENTION

To identify who is the operator, multiple detectors may be mounted around the operated portion to be able to detect from which direction a hand approached the operated portion. At this time, it is necessary to determine the fields of view of the detectors and their positions to prevent the hand from touching the operated portion without being detected by the detectors, i.e., the detectors create no dead angle. Consequently, the hand trying to operate the buttons and switches on the operated portion is always checked by the detectors. At normal times, one who attempts to perform operation exists in the direction in which the hand is first detected. Therefore, if the positional relationship between passengers in the vehicle, including the driver, is already known, it can be known whether the operator is the driver or a fellow passenger from the direction of detection. At the same time, the multiple detectors disposed around the operated portion can also be used as detectors for simple operations utilizing hand waving that can be done by the driver during driving. Where the detector on the driver side first detects the hand, it is determined that the driver tries to perform hand waving. The performed hand waving is estimated from the order of the detectors in which they detected the hand. A predetermined command corresponding to the hand waving is issued to the apparatus. In consequence, simple operations relying on hand waving are enabled without for the driver carefully watching the operated portion including buttons.

Furthermore, the dead angle of the detectors can be effectively reduced by making flat the detection ranges of the detectors and surrounding the outer periphery of the operated portion. The number of detectors can also be reduced.

Further, it is possible to identify whether a person trying to perform operation is on the driver's seat or on the front passenger seat by using a distance sensor for measuring the distance to the object instead of detectors for judging whether or not there is the object. In addition, it is possible to detect that the operation is done by a person on a rear seat or is hand waving. Where the operation is performed by the driver, a command can be created to make an input responsive to the distance to the hand.

Additionally, infrared radiation can be projected to a wider range by an inexpensive method using a system including an input device having an image display device ancillary to the input device. In this system, the infrared-projecting function of infrared reflection type object detectors is imparted to the display device. Infrared radiation is projected in addition to light emitted from the backlight of the image display device. Light reflected from the object to be detected is received by multiple infrared photosensors equipped around the input device. The dead angle of the detectors can be reduced. Furthermore, only the infrared photosensors are required to be mounted around the input device. This provides additional degree of freedom in arranging the components. Also, this is effective in miniaturizing the apparatus.

Furthermore, where the driver has started to perform operation while the vehicle is at a stop but he or she must start to drive the vehicle before the desired operation is completed, a function of saving the state of the screen being operated or modifying the operator to a fellow passenger is imparted to the display device. The operator himself/herself can make a choice. Thus, the operation can be handed down to other person. For example, a fellow passenger performs operation partly. The operation can be continued by the driver when the vehicle comes to a stop the next time.

Other objects, features and advantages of the invention will become apparent from the following description of the embodiments of the invention taken in conjunction with the accompanying drawings.

### BRIEF DESCRIPTION OF THE DRAWINGS

Fig. 1 is a schematic front elevation of one example of an input device according to the present invention, the input device being for an in-vehicle apparatus.
Fig. 2 is a schematic side elevation of the example shown in Fig. 1.
Fig. 3 is a schematic view showing the internal structure of the example shown in Fig. 1.
Fig. 4 is a diagram showing one example of signal pattern of hand waving input used in the example shown in Fig. 1.
Fig. 5 is a diagram showing another example of signal pattern of hand waving input used in the example shown in Fig. 1.
Fig. 6 is a diagram showing a further example of signal pattern of hand waving input used in the example shown in Fig. 1.
Fig. 7 is a diagram showing a yet other example of signal pattern of hand waving input used in the example shown in Fig. 1.
Fig. 8 is a diagram showing an additional example of signal pattern of hand waving input used in the example shown in Fig. 1.
Fig. 9 is a schematic cross section of one example of structure of an object detector.
Fig. 10 is a schematic cross section of one example of structure of an object detector having a sectorial detection region.
Fig. 11 shows a schematic side elevation and a schematic top view of another example of object detector used in the present invention.
Fig. 12 is a side elevation showing another example of detection region in a case where the object detector shown in Fig. 11 is used.
Fig. 13 is a schematic front elevation of another example of input device according to the invention, the device being for an in-vehicle apparatus.
Fig. 14 is a diagram showing one example of signal pattern of hand waving input in the example shown in Fig. 13.
Fig. 15 is a diagram showing another example of signal pattern of hand waving input in the example shown in Fig. 13.
Fig. 16 is a schematic front elevation of a still other example of input device according to the invention, the input device being for an in-vehicle apparatus.
Fig. 17 is a diagram showing one example of signal pattern of hand waving input used in the example shown in Fig. 16.
Fig. 18 is a diagram showing another example of signal pattern of hand waving input in the example shown in Fig. 16.
Fig. 19 is a schematic front elevation of a yet other example of input device according to the invention, the input device being for an in-vehicle apparatus.
Fig. 20 is a schematic side elevation partly in cross section of the example shown in Fig. 19.
Fig. 21 is a schematic block diagram showing the internal structure of the example shown in Fig. 19.
Fig. 22 is a diagram of one example of signal pattern of hand waving input used in the example shown in Fig. 19.
Fig. 23 is a diagram of another example of signal pattern of hand waving input used in the example shown in Fig. 19.
Fig. 24 is a diagram of a further example of signal pattern of hand waving input used in the example shown in Fig. 19.
Figs. 25A-25D are schematic representations of one example of operator-changing function of an in-vehicle apparatus according to the invention.
Fig. 26 is a flowchart illustrating a sequence of operations performed from the instant when the operation is started to the instant when an operation screen is ended to implement the operator-changing function of an in-vehicle apparatus according to the invention.

### DETAILED DESCRIPTION OF THE INVENTION

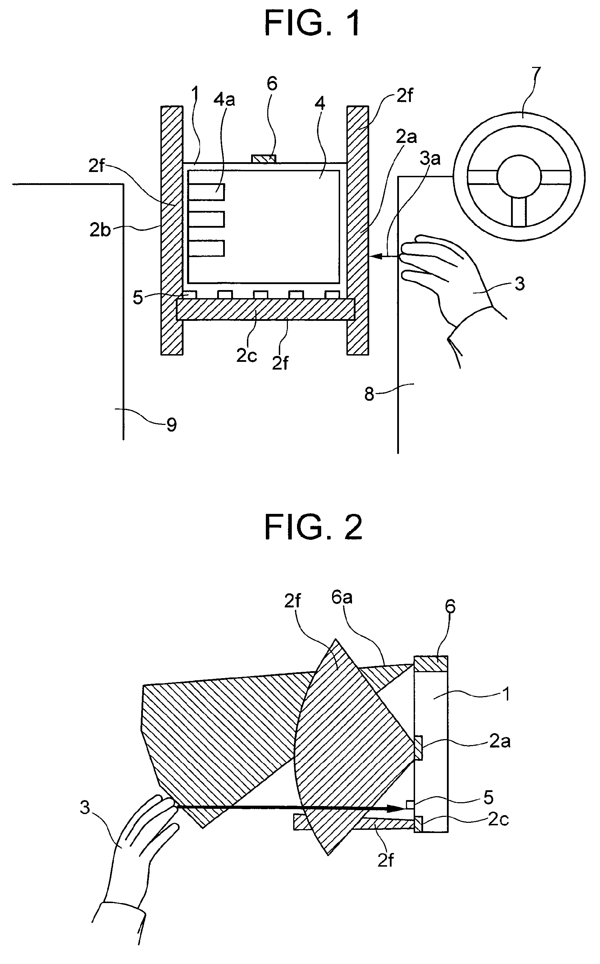

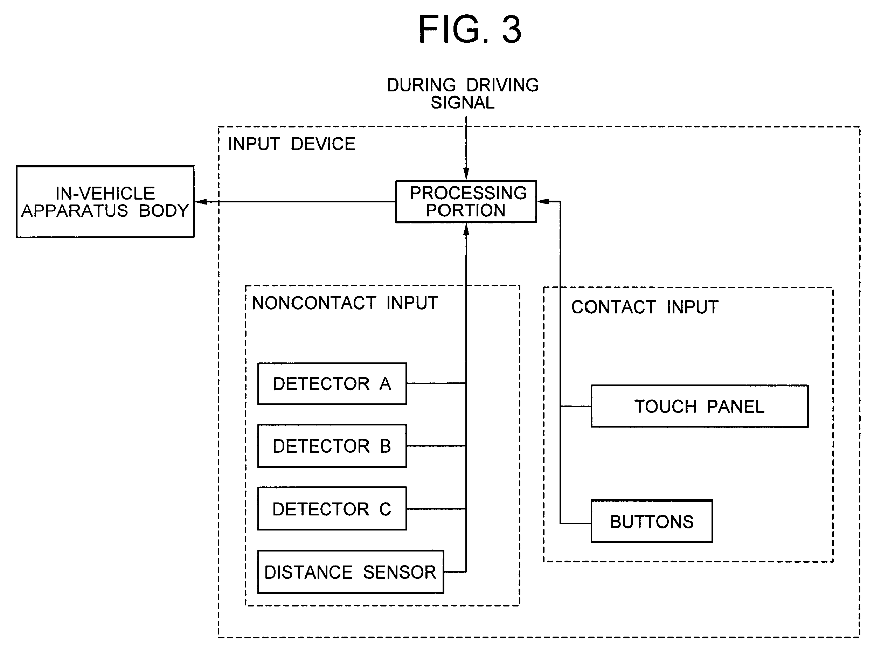

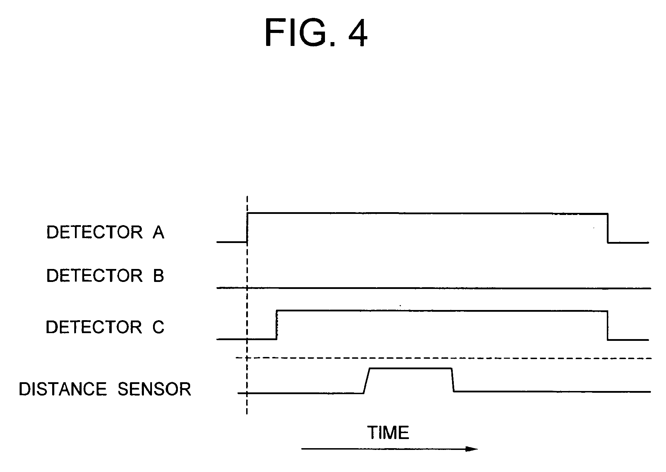

Fig. 1 is a schematic front elevation of one example of input device according to the present invention, the device being for an in-vehicle apparatus in a case of left-hand traffic. Fig. 2 is a side elevation of the device. The internal structure of the device is schematically shown in Fig. 3. Examples of pattern of detection signals are shown in Figs. 4-8.
In the present embodiment, the input device 1 forms a part of a car navigation system and has a liquid crystal display (LCD) 4, infrared reflection type object detectors A, B, C (2a, 2b, 2c), and a distance sensor 6 of the infrared reflection type or ultrasonic reflection type. The LCD 4 has a touch panel. The object detectors A-C and distance sensor 6 are arranged to surround button switches 5. Generally, the display device of a car navigation system is frequently installed on the dashboard between a space 8 on the side of the driver's seat and a space 9 on the side of the front passenger seat. The display device can be seen from both the driver's seat and the front passenger seat and is in an operable position. The system is operated using the buttons 5 or the touch panel operation portion 4a on the LCD 4. However, in order to operate these buttons and touch panel, it is necessary to watch the buttons or the display provided on the LCD 4 carefully. It is dangerous for the driver to perform such operations during driving.
Accordingly, it is discerned whether the operator is the driver, a person on the front passenger seat, or a person on a rear seat by making use of the object detectors A, B, C (2a, 2b, 2c) and distance sensor 6. Where the operator is the driver who is driving the vehicle, only operations relying on simple hand waving are tolerated. Inputs from the buttons 5 or touch panel 4a are not accepted. Where the operator is other than the driver, inputs from the buttons 5 or touch panel 4a are enabled, irrespective of whether or not the vehicle is in motion. This is the concept of the present invention.

As can be seen from Figs. 1 and 2, the detection region 2f of the object detectors 2a, 2b, and 2c of the infrared reflection type spreads fanwise. The region is determined by the extent passed by a hand of the driver or a fellow passenger on the front passenger seat when he/she tries to touch the buttons 5 or touch panel 4a, i.e., determined approximately by the distance from the detectors to the elbows of the driver or fellow passenger on the front passenger seat taken rearwardly of the vehicle. The region can be adjusted depending on the physique of the driver or fellow passenger sitting on the front passenger seat or on the position of the seat. The measurable range 6a of the distance sensor 6 is longer than the range of the object detectors and faces slightly downward. The range spreads with increasing the distance. Near the greatest distance in the vicinity of the backrest of the front seat, the range almost covers the front surface of the input device. As shown in Fig. 3, signals from the object detectors 2a, 2b, 2c and from the distance sensor 6, input signals to the touch panel 4a and to the buttons 5, and a during driving (in-motion) signal received from the vehicle are transmitted to the processing portion of the input device, where the signals are processed. The signals from the detectors 2a-2c and distance sensor 6 are noncontact input signals. Appropriate instructions are created from the processed signals and sent to the body of the in-vehicle apparatus. Generally, the during driving signal is produced by detecting that the brake is released. The principle of operation of the device according to the present embodiment is described below.

Identification of the operator is first described. Where a hand 3 is stretched to the input device 1 to operate the buttons or the like from the side of the driver's seat as shown in Fig. 1, the hand is inevitably detected by the detector A (2a) during normal operation, because the detector A (2a) has a sectorial detection range. Therefore, the hand is first detected by the detector A (2a). Accordingly, in a case where a detection signal is produced by the detector A (2a) from the state in which there is no detection, it can be determined that an object to be detected has entered from the side of the driver seat, i.e., driver's hand has entered. This determination is made by the processing portion, which also judges the during driving signal received from the vehicle. If the vehicle is in motion, touch input signals from the buttons 5 and touch panel 4a are nullified. Only hand waving inputs are accepted. Where the car navigation system should be controlled by hand waving, what are controlled are fundamental elements which do not require careful observation of the screen, such as movement of map, switching, and change of the brightness of the screen. Where the audio system should be controlled, what are controlled are fundamental elements not requiring careful observation such as volume change, start of playback, stop, fast feeding, rewinding, and skipping of tunes.

Similarly, when the detector B (2b) produces a detection signal under the condition where there is no detection, it can be determined that an object to be detected has entered from the side of the front passenger seat, i.e., the hand trying to perform operation has entered. Therefore, even during driving, input signals from the buttons 5 or touch panel 4a are not nullified. Furthermore, the in-vehicle apparatus is informed that the operator is other than the driver. A screen other than the screen normally shown during driving is shown. A menu of more complex operations can be displayed. Also, functions can be reassigned to the buttons 5. Where the signal from the distance sensor 6 is produced at a measurement value outside the detection distances of the detector A (2a), it is determined that the operation is being performed by a fellow passenger on a rear seat. If the detector C (2c) produces a first detection signal, or if the signal from the distance sensor 6 is first produced at values within the detection distance of the detector A (2a), it is judged that the input signal indicates an abnormal state. For the sake of safety, touch inputs using the buttons 5 and noncontact inputs utilizing hand waving are nullified until the signals cease.

The manner in which hand waving input is identified is next described by giving examples of pattern of detection signals. At least 6 kinds of hand waving actions of the driver can be identified by the detectors and distance sensor according to the present embodiment. Fig. 4 shows one example of pattern of detection signals responsive to driver's hand waving input. The lower level of the signal from each detector indicates no detection, while the higher level indicates detection. That is, the signal can assume two levels. When the signal from the distance sensor is in the lowest level, it is shown that there is no object to be detected. Lower levels indicate detection at greater distances. As the upper horizontal broken line is approached, detection at shorter distances is done. The horizontal broken line indicates the shortest measurable distance. At distances shorter than the shortest distance, distance measurement is impossible to perform, and only presence of an object to be detected is detected. In the present embodiment, a driver's hand waving action indicates a case where the hand is waved horizontally close to the center of the input device and then the hand is returned to the original position. The hand reached from the side of the driver's seat is first detected by the detector A. The hand then passes into the detection range of the detector C and then into the detection range of the distance sensor. Subsequently, the hand is returned to the original position. Accordingly, the detection signals assume a pattern as shown in Fig. 4. In particular, as indicated by the vertical broken line in Fig. 4, a detection signal from the detector A is first produced. Then, a detection signal from the detector C is produced. Then, the output signal from the distance sensor is produced. These signals cease in the reverse order. Because of the feature of this signal pattern, this type of hand waving can be identified and corresponding commands or inputs to the in-vehicle apparatus can be produced.

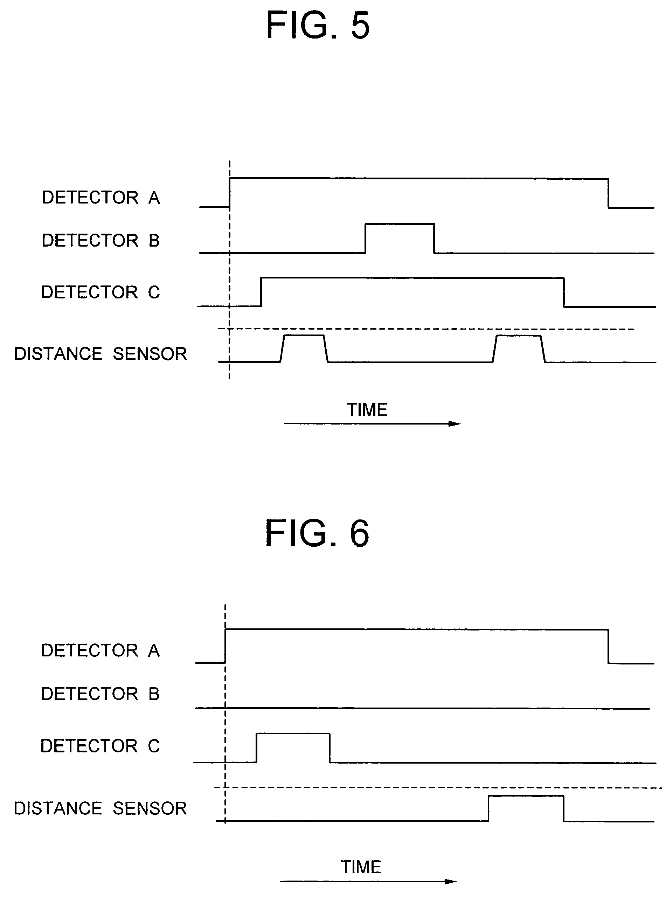

Fig. 5 shows an example of pattern of detection signals produced in response to other type of hand waving of the driver. In the present embodiment, the driver's hand is waved horizontally close to the end of the input device on the side of the front passenger seat, and the hand is returned to the original position. Unlike the case where a hand is partly inserted as shown in Fig. 4, the hand is waved close to the end on the side of the front passenger seat and so a detection signal from the detector B is produced when a detection signal from the detector A is being produced. Because of this difference, the difference between these two kinds of hand waving can be discerned.

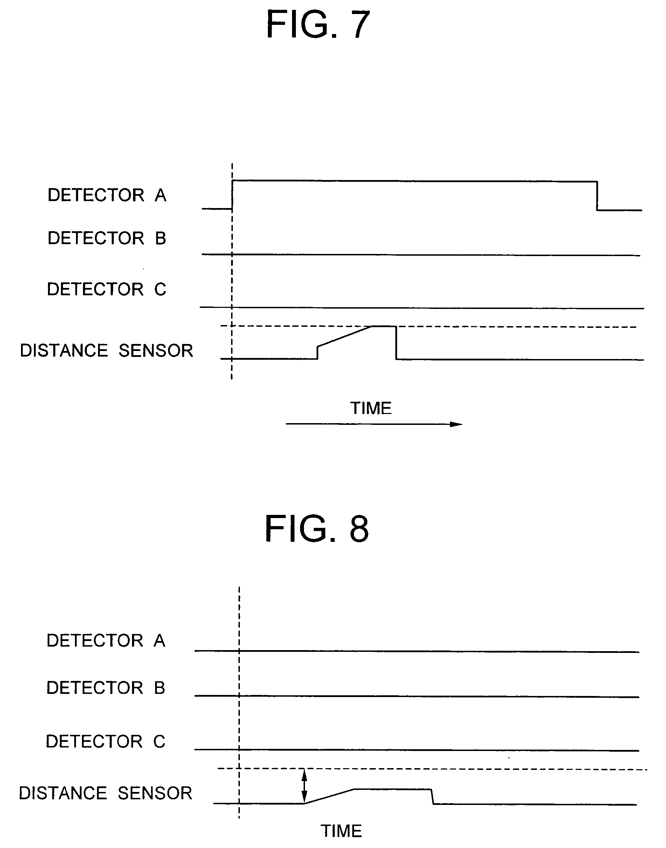

Fig. 6 shows an example of pattern of detection signals produced in response to other type of hand waving input made by the driver. In the present embodiment, the driver's hand is once waved from down to up near the horizontal center of the input device. At the instant when the driver's hand is introduced and touches the input device, the hand is first detected by the detector A. Since the hand is moved from down to up, the hand is detected by the detector C. After leaving the detection range of the detector C, the hand is detected by the distance sensor. After leaving the detection range of the distance detector, the hand leaves the detection range of the detector A. The hand waving shown in the example of Fig. 4 can be identified by the fact that the state in which the hand is detected simultaneously by the detector C and distance sensor does not exist. Where the driver's hand is once waved from up to down, the detection signals from the distance sensor and detector C are produced in the order reverse to the order in the example of Fig. 6 and thus the hand waving can be identified. Fig. 7 shows one example of pattern of detection signals produced in response to other hand waving input made by the driver. In the present embodiment, the driver's hand approaches the input device nearly over the horizontal center of the input device and then the hand is returned horizontally. In Fig. 7, the driver's hand is first detected by the detector A and then by the distance sensor, in the same way as in the previous embodiment. Since the hand approaches the input device, the output signal from the distance sensor indicating the result of the measurement of the distance rises in going rightwardly. When the hand makes normal horizontal motion, slight amounts of forward and rearward motion are produced. Therefore, the output signal from the distance sensor indicating the measurement result swings. However, when a hand is made to approach the device apparently, the magnitude of the swinging motion increases. Accordingly, these two kinds of motion can be discriminated by setting an appropriate threshold value. An input that is an analog amount varying according to the magnitude of the swinging motion can be made. Where the hand is moved away from the device conversely to the present embodiment, the output signal from the distance sensor indicating the result of the measurement rises in going leftwardly. This can also be discerned. In the case of hand waving input performed by a fellow passenger on the front passenger seat, the patterns in which detection signals are produced from the detectors A and B are interchanged.

Fig. 8 shows one example of pattern of signals responsive to one example of hand waving input made by a fellow passenger on a rear seat. In the present embodiment, the passenger on the rear seat brings his/her hand closer to the input device, holds the hand, and then the hand is moved out of the detection range of the distance sensor. The detection distance of the distance sensor is greater than the detection distance of the object detectors A, B, and C. When a hand of a fellow passenger on a rear seat is brought close to the device in a normal manner, the hand will not be within the detection distance of the object detectors A, B, and C. Accordingly, in the signal pattern, the output signal from the distance sensor is only a signal increasing in going rightwardly. Conversely, where the hand of the fellow passenger on the rear seat is moved away from the input device, the output signal from the distance sensor produces a signal pattern that decreases in going rightwardly. Therefore, these two kinds of pattern can be discriminated. Furthermore, in the same way as in the example of Fig. 7, an input of an analog amount can be made based on the magnitude of swinging motion depending on the distance traveled by the hand.

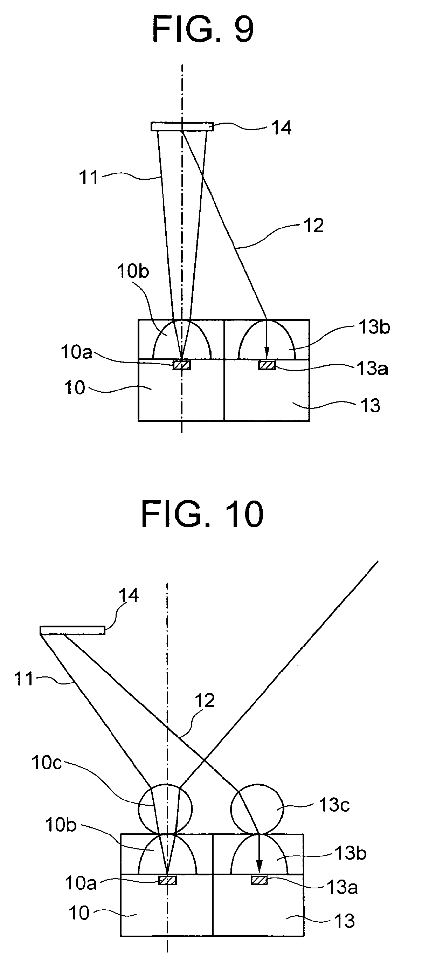

One example of structure of an object sensor having a wide sectorial field of view and used in the above example is next shown by comparison with a general, infrared reflection type sensor structure. Fig. 9 is a schematic cross section of one example of the structure of the object detector. The infrared reflection type object detector in the present embodiment has an infrared emitter 10 projecting infrared radiation 11 and an infrared photosensor 13. The projected infrared radiation 11 is reflected from an object 14 to be detected and then returning radiation 12 is received and detected by the infrared photosensor 13. Where the intensity of the detected reflected radiation is in excess of a given level, the infrared photosensor 13 produces an object detection signal. The infrared projector 10 has a built-in infrared-emitting device 10a. Infrared radiation emitted from the device is converged by a projection lens 10b and projected. Generally, the projected infrared radiation 11 is converged into a beam-like form to obtain a long projection distance. The infrared photosensor 13 has an infrared light-receiving device 13a and a receiving lens 13b. The projected infrared radiation 11 is reflected from the object 14 to be detected and the resulting reflected radiation 12 is guided to the infrared light-receiving device 13a via the lens 13b for light reception. An optical filter is attached to the photosensor to filter out wavelengths of radiation other than the used wavelength band. Furthermore, to discriminate the radiation 12 reflected from the object to be detected from naturally occurring, disturbing infrared radiation, the projected infrared radiation 11 is modulated. Normally, the disturbing radiation is removed by detecting the radiation incident on the infrared photosensor 13 in synchronism with the modulation. In the object detector according to the present embodiment, the projected infrared radiation 11 is converged into a beam-like form and, therefore, the detection range of the detector is narrow. In order to cover the input device without dead angle, a number of detectors are necessary. Hence, an object detector having a sectorial detection region is necessary.

Fig. 10 is a schematic cross section of one example of object detector having a sectorial field of view, the detector being designed based on a general object detector as shown in Fig. 9 by way of example. The differences with the general object detector shown in Fig. 9 are that the infrared emitter 10 has a rod lens 10c for projection as well as the projection lens 10b and that a rod lens 13c for reception is added to the infrared photosensor 13. The rod lens is a cylindrically shaped lens. Converged light entering the rod lens have such characteristics that the light does not spread in the direction of the height of the cylinder but spreads fanwise circumferentially as shown in Fig. 10. The projected infrared radiation 11 can be spread fanwise by using the rod lens 10c. Similarly, a rod lens is used on the side of the photosensor 13 to spread the field of view of the photosensor 13 fanwise. Consequently, an object detector having a wide sectorial field of view can be constructed. Instead of a single rod lens, plural rod lenses or a cylindrical lens can be used. Furthermore, a filmy optical element having similar functions because of a microstructure such as a microlens can be used. An integrated lens having optical characteristics achieving the two functions of the projection lens 10b and rod lens 10c can also be used.

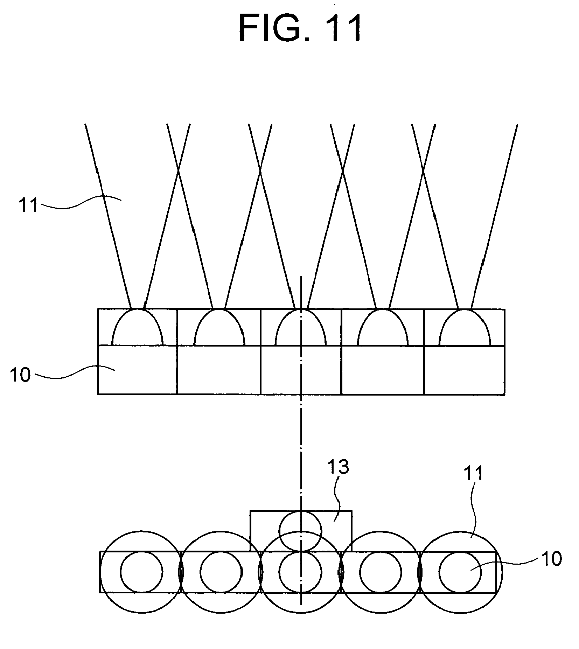

Fig. 11 schematically shows a side surface and the top surface of another example of object detector used in the present invention. In the present embodiment, a single infrared projector 10 does not project infrared radiation fanwise. Rather, multiple infrared emitters 10 are arranged in a row, and their infrared projection regions are superimposed to create a planar infrared projection region as a whole. Planar infrared radiation 11 projected is directed at an object to be detected and reflected from it. The reflected radiation is received by an infrared photosensor 13 having a wide field of view. Thus, the object is detected. Since the infrared emitters 10 operate in synchronism with the corresponding wide-field-of-view infrared photosensor 13, the detector is immune to extraneous disturbing radiation in the same way as the above-described embodiments.

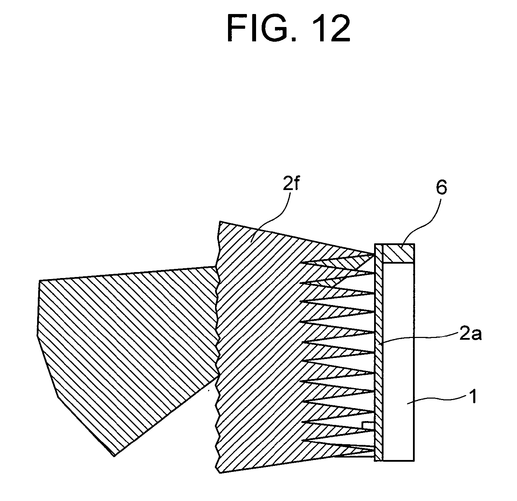

Fig. 12 is a side elevation of the detection region of the input device shown in Figs. 1 and 2 by way of example, and in which the object detector shown in Fig. 11 is used as the object detector of the input device. Comparison with the input device shown in Fig. 2 reveals that the object detector 2a located close to the input device 1 has a wider detection region 2f, yielding the advantage that the dead angle is reduced. In the present embodiment, multiple infrared emitters are closely arranged. If projected infrared rays overlap with each other, it is not always necessary that the infrared emitters be arranged closely. In addition, the infrared emitters projecting infrared rays fanwise and used in the object detector shown in Fig. 10 by way of example may be used in multiple such that projected infrared rays overlap with each other.

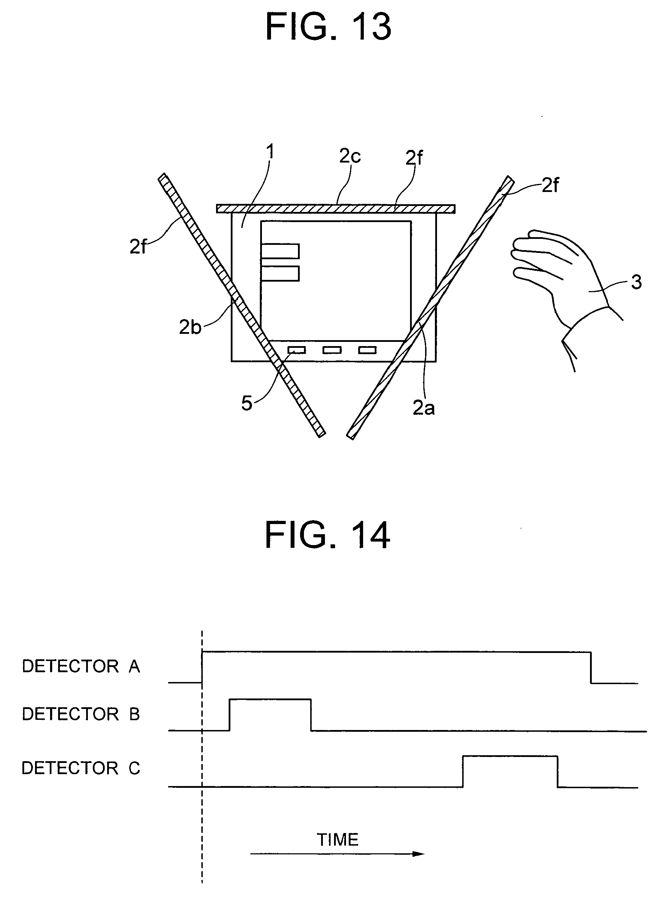

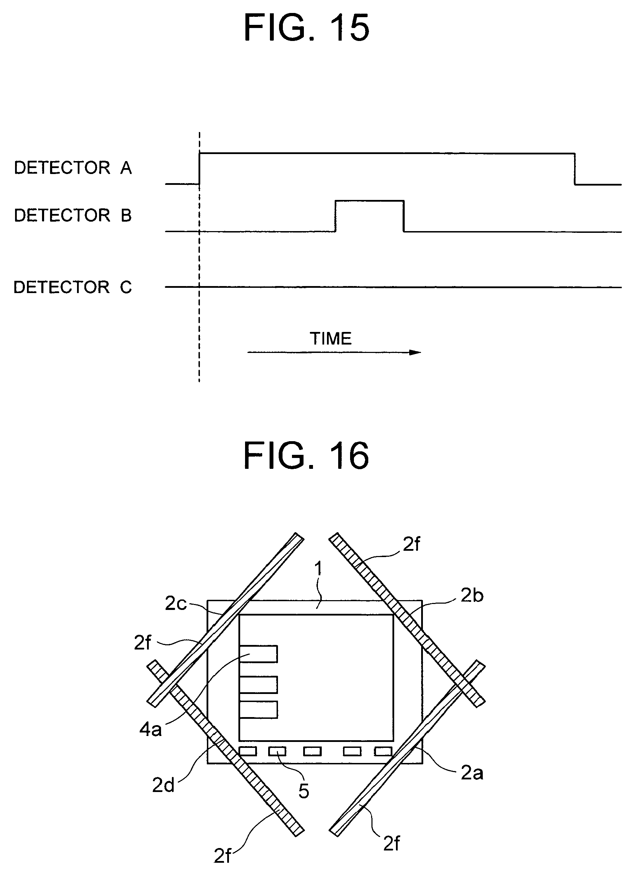

Fig. 13 is a schematic front elevation of another embodiment of the invention. Examples of pattern of detection signals are shown in Figs. 14 and 15. The present embodiment is a cut-down version of the above embodiments and so the distance sensor is omitted. Three object detectors A, B, and C, each having a sectorial detection range, are used. Of these detectors, the object detector A (2a) is disposed on the side of the driver. The object detector B (2b) is disposed on the side of the front passenger seat and obliquely arranged to close off the lower end of the detection range 2f. The object detector C (2c) is placed inside the upper end of the detection regions of the detectors A and B and does not enter the contact input region. Because of this arrangement, a driver's hand stretched to try to perform operation is always detected first by the object detector A (2a). Similarly, a hand of a fellow passenger on the front passenger seat which is stretched is first detected by the object detector B (2b). Therefore, the operators can be discriminated. In the present embodiment, at least three kinds of hand waving input made by the driver can be discerned.

Fig. 14 shows one example of pattern of detection signals produced in response to hand waving input made by the driver. In the present embodiment, a driver's hand is waved once from down to up around the horizontal center of the input device. As shown in Fig. 14, the driver's hand is detected first by the detector A when brought close to the device. Immediately thereafter, the hand is detected near the lower end of the detection region of the detector B. Then, if the hand is moved upward, the hand leaves the detection region of the detector B and passes through the detection region of the detector C. Finally, the hand exits from the detection region of the detector A. In this way, during detection by the detector A, the hand is detected by the detectors B and C in turn.
This creates a characteristic signal pattern. This sequence of operations can be identified. A corresponding command is transmitted to the in-vehicle apparatus. Consequently, it can be used as a hand waving input. Where the driver's hand waving consists of waving a hand from up to down near the horizontal center of the input device, detection signals from the detectors B and C are produced in the reverse order in Fig. 14. The hand is detected by the detector C.
After leaving the detection region, the hand is detected by the detector B. Then, the hand leaves the detection region. Therefore, this pattern can also be identified.

Fig. 15 shows one example of pattern of detection signals produced in response to other hand waving of a driver. In the present embodiment, the driver's hand waving consists of waving the hand horizontally approximately below the vertical center of the input device up to the vicinity of the end on the side of the front passenger seat and returning the hand to the original position. As shown in Fig. 15, the driver's hand is first detected by the detector A when the hand is being brought close to the device. Then, the hand enters the detection region of the detector B near the end of the side of the front passenger seat and is detected. Then, the hand is returned. At this time, the hand passes through the detection region of the detector B. Finally, the hand exists from the detection region of the detector A. Since the hand is waved approximately below the vertical center of the input device, the hand does not enter the detection region of the detector C. Since there is no detection signal from the detector C, this sequence of operations can be discriminated from the sequence of operations illustrated in Fig. 14. Furthermore, in the present embodiment, in a case where a fellow passenger on the front passenger seat performs a hand waving input, the resulting signal pattern is equivalent to interchanging the patterns of the signals from the detectors A and B shown in Figs. 14 and 15. Consequently, this sequence of operations can be identified and can be used as a hand waving input.

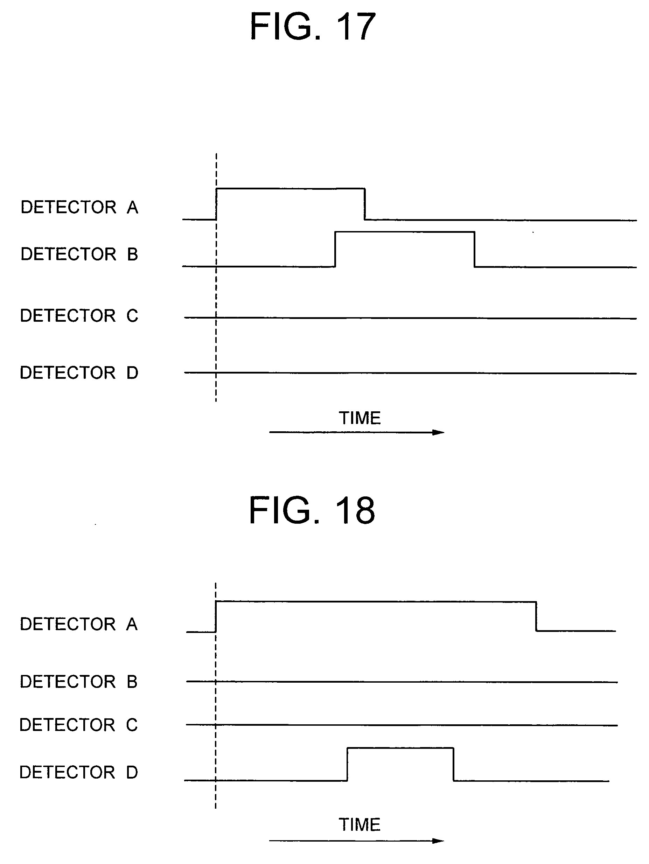

Fig. 16 is a schematic front elevation of another embodiment of the present invention. Examples of detection signal pattern produced in response to hand waving input are shown in Figs. 17 and 18. In the present embodiment, object detectors A and B are placed close to the driver's seat, while object detectors C and D are placed close to the front passenger seat such that the detection regions of the object detectors assume a roughly rhombic form surrounding the buttons 5 of the input device and the input area 4a on the touch panel. Therefore, the arrangement of the detectors is different from the arrangement of the previous embodiment but a hand trying to operate the input device from the driver's side is first detected either by the object detector A or B. A hand trying to perform operation from the side of the front passenger seat is first detected by either the detector C or D. Therefore, it can be discerned whether the person trying to perform operation is the driver or a fellow passenger on the front passenger seat.

Fig. 17 shows one example of pattern of detection signals produced in response to hand waving input made by a driver. In the present embodiment, the driver's hand waving consists of one action of hand waving from down to up near the end of the input device on the side of the driver's seat. As can also be seen from Fig. 16, the detection regions of the detectors A and B partially overlap near the end of the input device on the side of the driver's seat. The driver's hand moving from down to up is detected by the detector A and then by the detector B. Subsequently, the hand leaves the detection region of the detector A. Then, the hand exits from the detection region of the detector B. Since the hand waving is done near the end on the side of the driver's seat, none of the detectors C and D respond. In the pattern of detection signals from the detectors A and B, the signal from the detector A is produced earlier. The signals from the detectors A and B are superimposed for some time interval. Then, only the signal from the detector B remains. Because of this feature, this type of hand waving can be identified. A command for the corresponding in-vehicle apparatus can be produced. Where the driver's hand waving consists of waving from up to down near the end of the input device on the side of the driver's seat, the pattern of signals from the detectors A and B is reversed in order. Because of this feature, this type of hand waving can be identified.

Fig. 18 shows one example of pattern of detection signals produced in response to other hand waving input performed by a driver. In the present embodiment, the driver's hand waving consists of waving the hand horizontally near the lower end of the input device up to the vicinity of the end on the side of the front passenger seat and returning the hand to the original position. As shown in Fig. 18, the driver's hand is first detected by the detector A when the hand is brought close to the device. Then, the hand enters the detection region of the detector D near the side of the front passenger seat and is detected. If the hand is then returned, the hand leaves the detection region of the detector D. Finally, the hand leaves the detection region of the detector A. Since the hand is waved near the lower end of the input device, the hand passes into none of the detection regions of the detectors B and C. Because detection signals from the detectors B and C do not exist, this type of hand waving can be discriminated from the sequence of operations illustrated in Fig. 18. In the present embodiment, in a case where a fellow passenger on the front passenger seat makes an input by hand waving, the obtained signal pattern is equivalent to replacing the signal patterns from the detectors A and B by the signal patterns from the detectors D and C, respectively, in Figs. 17 and 18. Hence, this type of hand waving can be similarly identified and used as hand waving input. In the present embodiment, when a hand of the driver or a fellow passenger on the front passenger seat is waved vertically to make an input, it is not necessary to stretch the hand close to the center of the input device. The input can be made by slightly waving the hand near the right and left ends of the input device.

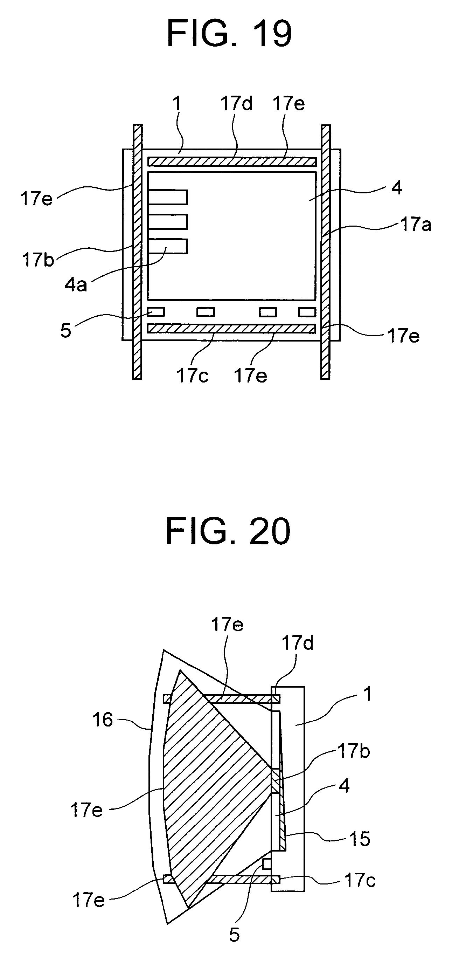

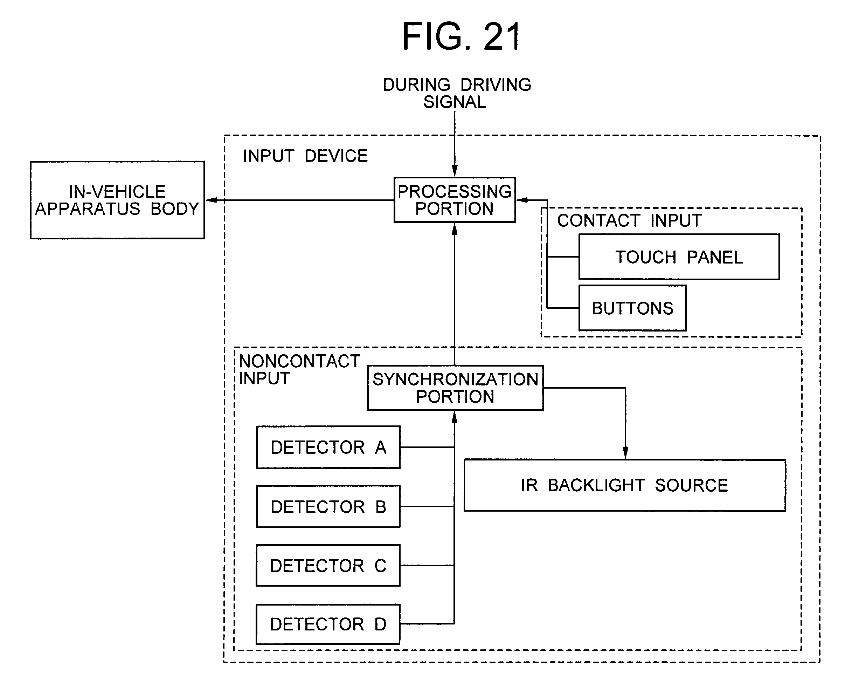

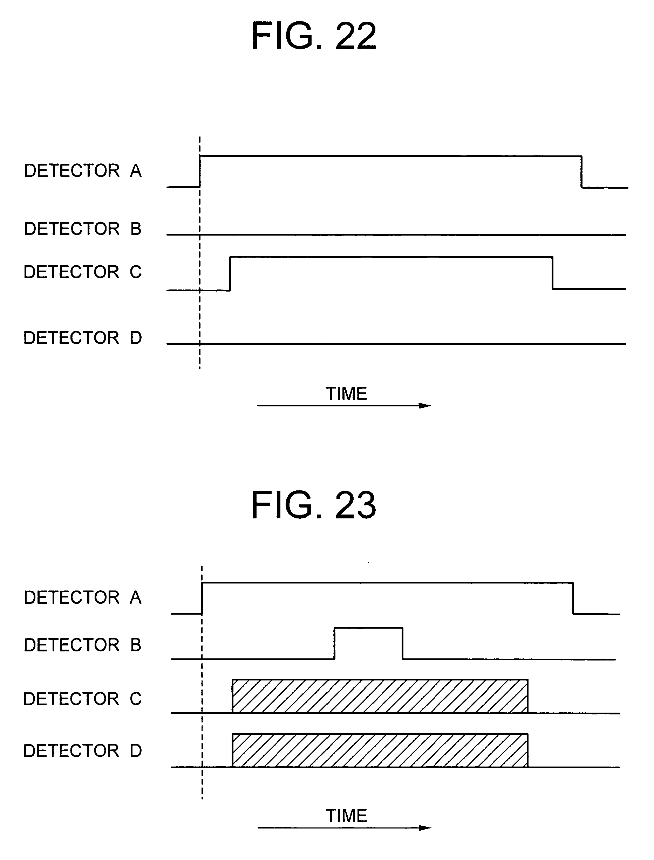

Fig. 19 is a schematic front elevation of another embodiment of the present invention. Fig. 20 is a schematic side elevation partially in cross section of the embodiment. Fig. 21 is a schematic block diagram showing the internal structure of the embodiment. Examples of pattern of detection signals produced in response to hand waving input made by the driver side are shown in Figs. 22-24. In many image display devices 4 equipped with a touch panel and used in car navigation systems, a touch panel function is added to a backlit liquid crystal display. This structure has a backlight source emitting white light which is so adjusted that the whole screen is made uniform in brightness. The white light is passed through color liquid-crystal filters to produce various colors and different degrees of brightness, thus creating an image. Frequently, a fluorescent tube or LEDs are used as the white light source of the backlight source. Infrared radiation 16 can be projected from the whole screen by adding infrared light-emitting devices such as infrared LEDs as the backlight source, adding infrared radiation lying outside the human visible range to white light, and using liquid crystal filters having a function of transmitting the infrared radiation. The infrared radiation is reflected from an object to be detected such as a hand. The returning radiation is detected by infrared photosensors which are disposed around the image display device and whose field of view is appropriately limited. Thus, it is possible to discern where the object such as a hand to be detected is present. The direction of the operator and hand waving can be identified from the pattern of detection signals, in the same way as in the foregoing embodiment. In the embodiment shown in Figs. 19 and 20, infrared photosensors forming detectors have a fanwise spreading field of view in the same way as the embodiment shown in Fig. 10. Light 16 from the backlight of a liquid crystal display 4 contains infrared radiation and hits an object. Reflected light is received, and the presence of the object is detected. The IR (infrared) component contained in the light from the backlight is modulated in the infrared backlight source in synchronism with the detectors, i.e., the infrared photosensors, as shown in Fig. 21 to reduce external disturbance due to other light sources located inside and outside. Since the modulation is performed outside the visible range in the same way as in the other embodiments, the modulation is invisible to the human eye. In this method of embodiment, the liquid crystal display backlight acts also as the infrared projector portions of the object detectors and so only infrared photosensors need to be disposed, thus achieving space savings. Furthermore, infrared radiation is projected to a wide range because a backlight is used. As a result, there is the feature that dead angle is unlikely to be created. In the present embodiment, a hand of the driver which is inserted to move the input device is illuminated with the light 16 from the backlight containing infrared radiation. The hand is first detected by the infrared photosensor A (17a) on the side of the driver. Conversely, where a fellow passenger on the front passenger seat tries to operate the device, the hand is first detected by the detector B (17b). Therefore, it is possible to identify whether the operator is the driver or the fellow passenger on the front passenger seat. Processing can be performed according to the operator.

Fig. 22 shows one example of pattern of detection signals produced in response to driver's hand waving input. In the present pattern of detection signals, hand waving of the driver consists of entering a hand from close to the lower end of the input device, waving the hand horizontally up to the vicinity of the horizontal center of the input device, and returning the hand to the original position. The driver's hand is illuminated with light 16 from the backlight of the liquid crystal display, the light containing infrared radiation. The reflected light is detected by the detector A (17a) and then detected by the detector C (17c). The hand is intact returned to the original position. Thus, the hand leaves the detection region of the detector C (17c). Finally, the hand goes out of the detection region of the detector A (17a). Therefore, the detection signals assume a pattern as shown in Fig. 22. If the hand is waved near the lower end of the input device or up to the vicinity of the horizontal center, detection signals from the detectors B and C are not produced. During detection by the detector A, a detection signal is produced from the detector C and ceases. Then, the detection signal from the detector A ceases. Because of this feature, the present hand waving can be identified. A corresponding command can be issued as a hand waving input.

Fig. 23 shows one example of pattern of detection signals produced in response to other hand waving of a driver. In the present embodiment, the driver's hand waving consists of waving the hand horizontally up to the vicinity of the end of the input device on the side of the front passenger seat and returning the hand to the original position. Unlike the case of Fig. 4 in which a hand is partly inserted, the hand is waved close to the end on the side of the front passenger seat and so a detection signal is produced from the detector B while a detection signal is being produced from the detector A. The difference makes it possible to discriminate these two kinds of hand waving.

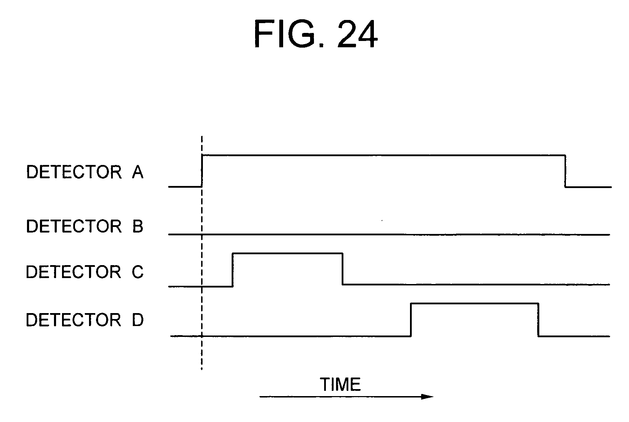

Fig. 24 shows one example of pattern of detection signals produced in response to other hand waving input made by the driver. In the present embodiment, the driver's hand is waved once from down to up near the horizontal center of the input device. The driver's hand is first detected by the detector A when the hand is inserted over the input device. Because the hand is moved from down to up, the hand is detected by the detector C. After leaving the detection region of the detector C, the hand is detected by the distance sensor. After passing through the detection region of the distance sensor, the hand exits from the detection region of the detector A.
This type of hand waving can be discriminated from the hand waving shown in Figs. 22 and 23 by way of example because a detection signal is not produced from the detector B during detection by the detector A and because the detectors C and D detect the hand in turn. Where the driver's hand waving consists of waving the hand from up to down once, this type of hand waving can be identified because the detection signals from the distance sensor and the detector C are produced in the order opposite to the order in the embodiment of Fig. 24. This type of hand waving can be used as a hand waving input. Where the operator is a fellow passenger on the front passenger seat, the pattern of signal from the detector A and the pattern of signal from the detector B are interchanged in Figs. 22, 23, and 24. Hence, this type of hand waving can be identified.

### (Other Embodiments)

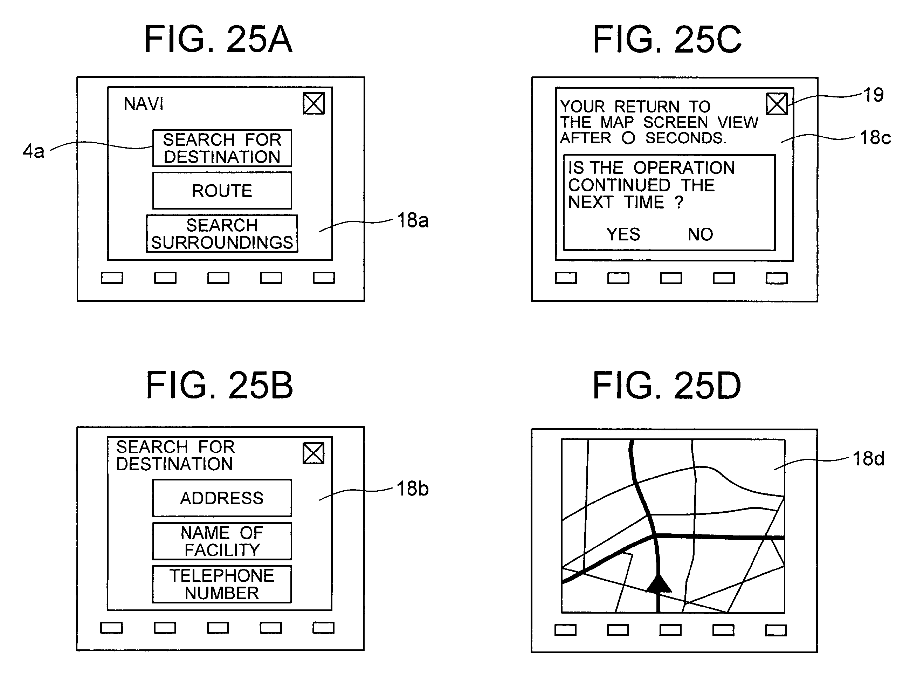

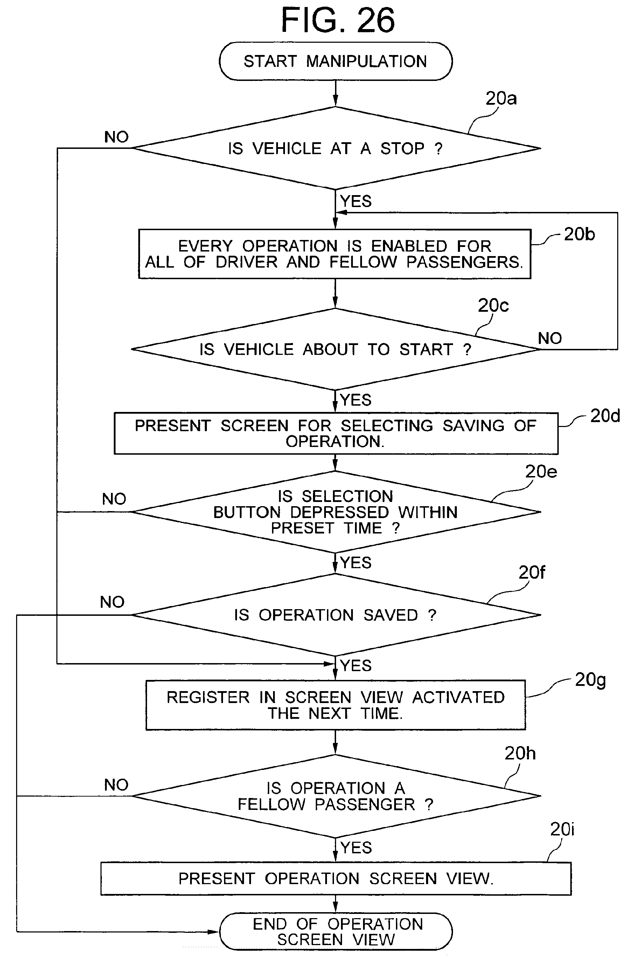

Figs. 25A-25D schematically illustrate one example of a function of changing the operator for an in-vehicle apparatus, the function being according to an embodiment of the present invention. Fig. 26 is a flowchart illustrating a sequence of steps from the start of operation to the instant when the operation screen is ended. Embodiments described below are typical embodiments. It is to be noted that the invention is not limited thereto.

In Fig. 25A, an example of a screen view of the highest level of hierarchy when a navigation function is selected is indicated by 18a. Normally, in the in-vehicle apparatus, multiple touch-panel input areas 4a are disposed on the screen view. Operations are performed by depressing the input areas. For example, where the operator wants to search for a destination from the name of facility using the navigation function, the input area 4a "search for destination" on the screen view 18a is depressed. The operator then goes to the next operation screen view 18b (Fig. 25B). The input area "name of facility" on the screen view 18b is depressed. A selection is made from the list of facilities. It is difficult to perform operations of such deep levels of hierarchy in a short stop time such as waiting at a stoplight. It has been heretofore urged to end the operation screen view even if the intended operation is not completed. In addition, the next operation, if it is done, must be started again from the screen view of the highest level of hierarchy. Where the operator is urged to interrupt the operation, a screen view 18c (Fig. 25C) is presented to prompt the operator to determine whether or not the operation is saved before control returns to a map screen view 18d (Fig. 25D). Accordingly, when the next operation is performed, the operation can be resumed subsequently to the previous operation. When the vehicle is in motion, if the operator is other than the driver, the operator can take over the operation. The screen view 18c may be displayed in response to start of the vehicle. The operator may make a request from the touch panel to display this screen view. The fellow passenger referred to herein is a person who is not associated with driving and who is sitting on the front passenger seat or on a rear seat. Furthermore, the operation may be changed between multiple monitors such as front monitor and rear seat monitor. Where there is no fellow passenger, or where the driver wants to complete the operation by himself/herself, the operation can be continued during the next waiting time at a stoplight if a setting is selected in which the operation can be continued when next operation is performed. This produces efficient results. The screen 18c for selecting saving of the operation may be automatically switched to the map screen view 18d when a waiting time previously set by the user has elapsed. Alternatively, the screen view may be switched to the map screen view 18d by depressing an input area 19 on the operation saving-selecting screen view 18c to close the screen view. Where the preset waiting time has elapsed and the user has made no choice, automatic saving of operation may be selected.

Fig. 26 is a flowchart illustrating a sequence of steps from the start of operation to the instant when the operation screen view is ended. In step 20a, a decision is made as to whether the vehicle is currently at a stop from the state of some running device (such as the state of the parking brake, the state of the engine, or the state of rotation of the tires). If the decision at step 20a is Yes (i.e., the vehicle is at a stop), control goes to step 20b. If the decision at step 20a is No (i.e., the vehicle is in motion), control goes to step 20f. In step 20b, every operation is accepted irrespective of whether the operator is the driver or a fellow passenger. In step 20c, a decision is made as to whether or not the vehicle soon starts to run, from the state of some running device such as the parking brake, in the same way as in step 20a. If the decision at step 20c is Yes (i.e., the vehicle starts to run soon), control goes to step 20d, where the operation saving-selecting screen view 18c is displayed. In step 20e, a decision is made as to whether operation on the operation saving-selecting screen view is done within a preset time. If the decision at step 20e is Yes (done within the preset time), control goes to step 20f. If the decision at step 20e is No (i.e., a timeout has occurred), control goes to step 20g. In step 20f, a decision is made as to whether or not saving of operation has been selected. If the decision at step 20f is Yes (i.e., saving of operation has been selected), control goes to step 20g. If the saving is not selected, the operation is ended. In step 20g, processing for saving the screen view as the screen view to be presented when the next operation is performed is carried out. In step 20h, a decision is made as to whether the operator is a fellow passenger other than the driver. This decision can be made using the aforementioned object detectors. If the decision at step 20h is Yes (i.e., the operator is a fellow passenger), control goes to step 20i. If the decision at step 20h is No (i.e., the operator is the driver), the operation screen view is ended. In step 20i, the screen view registered in step 20g is presented. The operation can be continued only provided that the operator is a fellow passenger.

It should be further understood by those skilled in the art that although the foregoing description has been made on embodiments of the invention, the invention is not limited thereto and various changes and modifications may be made without departing from the spirit of the invention and the scope of the appended claims.

## Claims

1. An input device (1) for an in-vehicle apparatus, comprising:
three or more object detectors (2a-2c) mounted around the input device (1) and producing detection signals by detecting an object (3) to be detected,
wherein an input signal to be applied to the in-vehicle apparatus is created in response to a pattern of said detection signals and transmitted to the in-vehicle apparatus.

2. The in-vehicle apparatus equipped with an input device, comprising:
three or more object detectors (2a-2c) mounted around the input device (1) and producing detection signals by detecting an object (3) to be detected,
wherein an input signal to be applied to the in-vehicle apparatus is created in response to a pattern of said detection signals and transmitted to the in-vehicle apparatus.

3. The subject matter of claim 1 or 2,
wherein said input device discerns a direction in which an operator who operates the input device (1) is present from patterns of the detection signals from the object detectors (2a-2c), and wherein a function of the input device (1) is switched or the input signal to the in-vehicle apparatus is created and transmitted to the in-vehicle apparatus by making use of information about the direction.

4. The subject matter of any of claims 1 to 3,
wherein each of said object detectors (2a-2c) of the input device (1) is an infrared reflection type detector having a pair of an infrared emitter (10) and an infrared photosensor (13) for capturing the infrared radiation reflected from the object (3) to be detected, and wherein infrared radiation radiated from the infrared emitters (10) spreads fanwise.

5. The subject matter of any of claims 1 to 3,
wherein each of said object detectors (2a-2c) of the input device (1) has a plurality of infrared emitters (10) and a single infrared photosensor (13) moving synchronously.

6. The subject matter of any of claims 1 to 3,
wherein said input device has at least one distance sensor (6) capable of measuring a distance to the object (3) to be detected, and wherein the input device creates said input signal to be applied to the in-vehicle apparatus according to combinations of distance data derived from the distance sensor (6) and patterns of ones of the detection signals from the object detectors and transmits the created input signal to the in-vehicle apparatus.

7. The subject matter of any of claims 1 to 3,
wherein said input device (1) has an image display device (4) having an infrared radiation-emitting function, and wherein each of said object detectors (2a-2c) includes an infrared photosensor (13) for capturing the infrared radiation reflected from the object (3) to be detected.

8. The in-vehicle apparatus as set forth in claim 2 or 3, wherein said input device (1) displays an operation saving-selecting screen view (18c) for prompting an operator to make a decision as to whether or not operation from a driver is saved when a vehicle makes a transition from a state in which the vehicle is at rest and the operation from the driver is acceptable to a state in which the vehicle is in motion.

9. The in-vehicle apparatus as set forth in claim 8, wherein said operation saving-selecting screen view (18c) on the input device (1) is automatically displayed by detecting that the vehicle is about to make a transition to the state in which the vehicle is in motion or displayed based on an input made by the driver.

10. The in-vehicle apparatus as set forth in claim 8, wherein said operation saving-selecting screen view (18c) on the input device (1) automatically disappears after a lapse of a given time and makes a transition to a map display screen view (18d).

11. The in-vehicle apparatus as set forth in claim 8, wherein when operation from a fellow passenger is performed after said operation saving-selecting screen view (18c) displayed on the input device (1) is saved, a screen view for the operation from the fellow passenger is displayed.
